**Europäisches Patentamt**

**European Patent Office**

**Office européen des brevets**

(19)

(11) Veröffentlichungsnummer: **0 131 227**
**A2**

(12)

# EUROPÄISCHE PATENTANMELDUNG

(21) Anmeldenummer: **84107626.8**

(22) Anmeldetag: **02.07.84**

(51) Int. Cl.⁴: **B 29 D 11/00**

(30) Priorität: **12.07.83 DE 3323055**

(43) Veröffentlichungstag der Anmeldung:
**16.01.85 Patentblatt 85/3**

(84) Benannte Vertragsstaaten:
**AT BE CH DE FR GB IT LI NL SE**

(71) Anmelder: **BAYER AG**
**Konzernverwaltung RP Patentabteilung**
**D-5090 Leverkusen 1 Bayerwerk(DE)**

(72) Erfinder: **Schwabe, Peter, Dr.**
**Dudweiler Strasse 17**
**D-5090 Leverkusen(DE)**

(72) Erfinder: **Wingler, Frank, Dr.**
**Walter-Flex-Strasse 17**
**D-5090 Leverkusen(DE)**

(72) Erfinder: **Geyer, Otto-Christian, Dr.**
**Bahnhofstrasse 12**
**D-6330 Wetzlar(DE)**

(54) **Verfahren zur Herstellung von kontaktoptischen Gegenständen.**

(57) Verfahren zur Herstellung von kontaktoptischen Formkörpern aus thermoplastisch vererbeitbaren, transparenten Materialien durch Formgebung unter Druck und Erwärmen, wobei man aus einer Folie gleichmäßiger Dicke aus dem betreffenden thermoplastischen Material optisch fehlerfreie Rohlinge vom Gewicht der herzustellenden Formkörper stanzt oder schneidet und diese zwischen zwei Stempeln entsprechend den Geometrien der herzustellenden Formkörper in einem Formwerkzeug bei bestimmten Temperaturen oberhalb der Glasübergangstemperatur des thermoplastischen Materials, jedoch noch unterhalb dessen Schmelzflußtemperatur, umformt.

BAYER AKTIENGESELLSCHAFT        5090 Leverkusen, Bayerwerk

Konzernverwaltung RP
Patentabteilung

Verfahren zur Herstellung von kontaktoptischen Gegenständen

Die vorliegende Erfindung betrifft ein verbessertes Verfahren zur fehlerfreien Massenfabrikation spannungsfreier kontaktoptischer Gegenstände, wie z.B. Kontaktlinsen oder Schalen, Skleralschalen, intraokularer Linsen, etc. nach einem Preßverfahren aus transparenten, thermoplastischen Materialien durch Umformen von Rohlingen, die schon das Gewicht der endgültigen Linse oder Schale besitzen, zwischen konvexen bzw. konvexen und konkaven Prägestempeln unter Druck bei Temperaturen oberhalb der Glasübertragungstemperatur des thermoplastischen Materials, jedoch unterhalb dessen Schmelzflußtemperatur.

Kontaktlinsen oder -Schalen werden heutzutage in der Regel auf einem der folgenden Wege hergestellt:

Man fertigt zunächst aus dem gewünschten Material sogenannte Knöpfe oder Blanks, das sind ca. 500 mg schwere Rohlinge, die ein Vielfaches des Gewichtes der zu fertigenden Linse oder Schale besitzen. Bei der Rohling-

Le A 22 431 -Ausland

herstellung aus thermoplastischen Materialien formt man die Blanks oder Knöpfe durch Injektionsspritzguß aus der Polymerschmelze, bei duroplastischen Materialien stellt man das fertige Polymer in Form von Stangen her, die zersägt werden, oder man polymerisiert oder vulkanisiert noch nicht vollständig ausreagierte Materialien direkt in Näpfchen mit einer dem Rohling entsprechenden Form aus. Aus diesen Rohlingen werden die Linsen oder Schalen durch spanabhebende Bearbeitung, d.h. durch Fräsen, Drehen, Schleifen und Polieren hergestellt. Die fertige Kontaktlinse wiegt schließlich etwa 15 bis 30 mg. Dieses Verfahren ist somit nicht nur arbeitsaufwendig, sondern man verliert auch über das 10 fache des wertvollen Kontaktlinsenmaterials. Bei speziellen, für den biomedizinischen Einsatz hergestellten Polymeren ist dieser Materialverlust besonders unwirtschaftlich.

Eine weitere Methode zur Fertigung von Kontaktlinsen oder -Schalen besteht darin, daß man eine noch nicht ausreagierte polymerisierbare Reaktionsmischung oder Lösung in Formen mit konkaven und konvexen Flächen bringt und die Reaktionsmischung nach Zusammenfügen der Form ausreagieren läßt. Bei diesem Verfahren tritt zwar kein Materialverlust auf, jedoch ist es auf duroplastische oder ausvulkanisierende Systeme, z.B. auf Basis von Siliconen oder Methacrylsäureoxialkylestern beschränkt. Der eben diskutierte Stand der Technik wird z.B. in folgenden Druckschriften beschrieben:

Le A 22 431

PCT-Anmeldung WO 82/04221, Deutsche Offenlegungsschriften
2 712 437, 2 838 710, 2 839 249, 2 941 264 und 2 949 951.

Gemäß einem anderen in der Praxis angewandten Verfahren
werden Polymerpulver zwischen Stempeln zu Linsen oder
Schalen verpreßt. Dieses Verfahren ist zwar auf thermoplastische Materialien beschränkt, liefert aber gegenüber dem spanabhebenden Verfahren Linsen und Schalen
mit besserer Oberflächengüte. Es ist besonders vorteilhaft bei der Herstellung von Linsen oder Schalen mit
nicht sphärischer Innenform. Bei dem erwähnten Verfahren wird das Material in Pulverform in Formen eingefüllt und anschließend unter Druck bei höherer Temperatur zu Linsen gesintert. Ein Nachteil dieses Sinter-
Verfahrens ist, daß oft die Pulverteilchen nicht
gleichmäßig versintern oder verlaufen, daß Gaseinschlüsse oder Vakuolen entstehen und daß die optische
Reinheit des Materials erst nach Fertigstellung der
Linse begutachtet werden kann. Das Verfahren ist zwar
weniger aufwendig als das spanabhebende Verfahren, der
Materialbedarf ist auch weit geringer, jedoch bringt
es größere Fehlermöglichkeiten durch Verunreinigungen.
Der Ausschuß bei der Linsenherstellung ist daher im
allgemeinen sehr hoch. Außerdem besteht insbesondere
bei Verarbeitung von Celluloseestern aliphatischer Carbonsäuren oder von Homo- oder Copolymeren von Methacrylsäureestern die Gefahr der Verunreinigung bei der
Pulverherstellung infolge elektrostatischer Anziehung
von Fremdpartikeln aus der Umgebung bzw. von Feuchtigkeit und Dämpfen. Die Verunreinigung mit einem Pulver-

Le A 22 431

korn, dessen Brechzahl sich lediglich in der 4. Stelle hinter dem Komma von dem des restlichen, pulverförmigen Kontaktlinsenmaterials unterscheidet, führt bereits zu einer erkennbaren Schliere in der fertigen Linse oder Schale.

Aufgabe der Erfindung war es, ein neues Preßverfahren aufzufinden, das weniger Fehlerquellen in sich birgt und kontaktoptische Gegenstände mit verbesserter Homogenität, weniger Schlieren, geringerer Spannung und damit höherer Radienstabilität liefert.

Die Aufgabe wurde gelöst, indem man das thermoplastische Material zunächst kontinuierlich aus der Schmelze zu Folienbändchen, bevorzugt mit einer Dicke von 0,1 bis 1,0 mm, insbesondere 0,15 - 0,4 mm extrudiert, diese auf Walzen unter Abkühlen glättet, optisch fehlerhafte Stellen auf den Bändchen markiert oder eliminiert, Rohlingplättchen vom genauen Gewicht der zu fertigenden Linse oder Schale schneidet oder stanzt und diese zwischen Preßstempeln in einer Form unter Druck bei Temperaturen zwischen mindestens 20°C und maximal 80°C oberhalb der Glasübergangstemperatur, jedoch noch unterhalb der Schemlzflußtemperatur, zu einem spannungsfreien Formkörper umformt und diesen nach dem Erkalten aus der Form bzw. von dem Preßwerkzeug löst.

Gegenstand der vorliegenden Erfindung ist demnach ein Verfahren zur Herstellung von kontaktoptischen Gegenständen aus thermoplastisch verarbeitbaren, transparenten Materialien durch Formgebung unter Druck und Erwärmen, welches dadurch gekennzeichnet ist, daß man aus einer Folie gleichmäßiger Dicke optisch fehlerfreie Rohlinge vom Gewicht der herzustellenden Formkörper stanzt oder schneidet und diese zwischen zwei Stempeln entsprechend den Geometrien der herzustellenden Formkörper in einem Formwerkzeug bei Temperaturen zwischen 20° und 80°C oberhalb der Glasübergangstemperatur des thermoplastischen Materials, vorzugsweise unter einem Druck von 1 bis 100 kg/cm² und bevorzugt während eines Zeitraums von 5 bis 120 Minuten umformt.

Die Herstellung der erfindungsgemäß zu verwendenden Folienbändchen kann z.B. auf herkömmlichen Einwellen- oder Zweiwellen-Schneckenextrudern mit Breitschlitzdüsen und hinterhergeschalteten Glättwalzen oder Kalandern erfolgen. Das Gewicht der ausgestanzten Rohlingsplättchen ergibt sich aus deren Durchmesser und der Foliendicke.

Zum Umformen werden z.B. Preßwerkzeuge aus Glas, Quarz oder Metallen mit polierter Oberfläche verwendet. Die Preßwerkzeuge besitzen die entsprechenden Geometrien zu den gewünschten Linsen, Schalen etc. Besonders vorteilhaft ist das erfindungsgemäße Verfahren zur Herstellung von Linsen mit nicht sphärischen Innenflächen, von Linsen mit bestimmten Krümmungsabflachungen zum Rand hin, Linsen für Patienten mit Hornhautvorwölbungen (Keratokonus-Linsen) und von Linsen, die ein genaues Gegenstück der gesamten Vorderaugenkammer darstellen sollen, d.h. von Skleralschalen. Solche sogenannten Asphären sind nach spanabhebenden Verfahren nur unter großem Fertigungsaufwand herstellbar.

Le A 22 431

Die Folienplättchen werden beim erfindungsgemäßen Verfahren zwischen konvexen und konkaven Prägestempeln in Formwerkzeuge eingebracht, die ein Austreten des thermoplastischen Materials während des Umformungsvorganges verhindern. Die Umformung zur Kontaktlinse, Kontaktschale und dergleichen erfolgt unter Druck, in der Regel bei 1 bis 100 kg/cm², bevorzugt bei 20 bis 100 kg/cm². Prinzipiell sind auch höhere Drücke möglich, jedoch besteht dann die Gefahr, daß thermoplastisches Material in den Formrand eingedrückt wird und die Form verbackt; sie läßt sich dann nicht mehr ohne Zerstörung des Formkörpers öffnen. Die Umformung erfolgt bei einer Temperatur von mindestens 20°C oberhalb der Glasübergangstemperatur des thermoplastischen Materials, jedoch bei Temperaturen von nicht höher als 80°C, bevorzugt 60°C oberhalb der Glasübergangstemperatur, noch bevor das erweichte Material den Zustand des Schmelzflusses erreicht hat. Ein geeigneter Temperaturbereich für thermoplastische Materialien auf Basis von Celluloseacetobutyrat, wie sie beispielsweise in der DE-OS 2 807 663 beschrieben werden, liegt z.B. bei 141°C bis 181°C, für Copolymerisate aus Methylmethacrylat mit Acrylsäuremethylester bei 120°C bis 160°C. Der Druck beträgt in der Regel mindestens 1 kg/cm², vorzugsweise mindestens 5 kg/cm² und soll 100 kg/cm² nicht überschreiten. Die Dauer des Umformvorganges liegt in der Regel bei mindestens 5 Minuten, vorzugsweise bei etwa 60 Minuten. Längere Umformzeiten als 120 Minuten sind ohne Vorteil und führen höchstens zu einer thermischen Schädigung des Materials.

Le A 22 431

Die Preßwerkzeuge bestehen aus porenfreiem Material, z.B. aus Glas, Quarz, Keramik oder Metallen (verchromte Stähle; Präzisionsabdrucklegierungen auf Basis von Zinn, Blei, Silber, Antimon und Wismuth). Die Oberflächen sind zweckmäßigerweise vergütet, besonders die konkaven Stempelflächen, die der Kontaktlinse die dem Auge zugewandte Oberfläche aufprägen. Die Oberflächenrauhigkeit sollte unter 0,02 μm liegen. Ein u.a. in Frage kommendes Preßwerkzeug ist z.B. in der DOS 2 806 388 beschrieben.

Von großem Vorteil für die Qualität des herzustellenden kontaktoptischen Formkörpers ist es, wenn die in die Form vor dem Umformen eingelegten Rohlingsplättchen bereits auf ca. ± 0,5 mg das genaue Gewicht des gewünschten Formkörpers besitzen. Bei zu leichten Plättchen füllen sich die Formen nicht vollständig aus, es entstehen Linsen mit unvollständig ausgebildeten Randzonen; bei zu schweren Rohlingen werden die Linsen zu dick, besonders in den Randbereichen.

Thermoplastische Materialien, die besonders für die Verarbeitung nach dem erfindungsgemäßen Verfahren geeignet sind, sind Celluloseester aliphatischer Carbonsäuren, insbesondere in Form von an niedermolekularen Weichmachern freien Polymerblends mit z.B. Polyethylen/Vinylacetat-Copolymer, hochmolekularen aliphatischen Polyestern oder Polyestercarbonaten, bzw. auch Polyacrylsäuremethylester/Acrylsäurebutylester-Copolymere, wie sie beispielsweise in DE-OS 2 807 663,

Le A 22 431

DE-OS 3 314 188 und US-PS 4 263 183 beschrieben werden. Weitere erfindungsgemäß geeignete thermoplastische, optisch durchlässige Materialien sind u.a. Poly-4-methylpenten-1, aromatische Polycarbonate, sternförmige Styrol/Butadien-Blockpolymerisate, Polyamide mit cycloaliphatischen Diamine und insbesondere Homo- oder Copolymerisate von Methacrylsäureestern, wie Polymethylmethacrylat oder Methylmethacrylat/Methylacrylat-Copolymere.

Die nach dem erfindungsgemäßen Verfahren hergestellten kontaktoptischen Formkörper zeichnen sich durch besondere optische Reinheit, geringe Einschlüsse, Luftblasen oder Vakuolen, durch eine exakte Randstruktur, geringe Oberflächenrauhigkeit von unter 0,02 µm, sowie Schlierenlosigkeit aus. Die Linsen oder Schalen sind spannungsfrei und besitzen eine hervorragende Radienstabilität auch bei langen Aufbewahrungs- oder Tragezeiten.

Le A 22 431

Beispiele

Ein Polymerblend aus 95 Gew.-% Celluloseacetobutyrat
(Hydroxylgehalt: 1,7 Gew.-%, Buttersäuregehalt: 46 Gew.-%,
Essigsäuregehalt: 20 Gew.-%) und 5 Gew.-% Polyethylenco-vinylacetat (mit 70 Gew.-% Vinylacetatanteil) mit
einer Glasübergangstemperatur von 111°C wurde auf einem
konischen Zweiwellenextruder bei 190°C durch eine Breitschlitzdüse zu einem 40 mm breiten und 0,3 mm dicken
Folienband extrudiert, welches auf einem Dreiwalzenstuhl geglättet und abgekühlt wurde. Aus dieser Folie
wurden kreisförmige Plättchen vom Durchmesser 9 mm
und 18,3 mg Gewicht gestanzt. In eine Führungshülse
wurde ein konkaver Glasstempel mit einem Krümmungsradius von 8,25 mm und einer asphärischen Randabflachung
eingelegt, hierauf ein Rohlingsplättchen gelegt und die
Form mit einem konvexen Glasstempel mit einem Vorderflächenradius, der einem Scheitelbrechwert der Linse
von -2,25 Dioptrien entspricht, verschlossen. Die Umformvorrichtung wurde mit 10 kg belastet und in einem
Umluftwärmeschrank innerhalb von 45 Minuten auf 160°C
aufgeheizt. Das Werkzeug wurde erkalten gelassen,
aus der Führungshülse gelöst und die Linse in Eiswasser
vom Glasstempel abgelöst. Die Randzone war präzise ausgebildet, durch Polieren wurde sie auf die erforderliche Dicke gebracht. Die Linse wurde in physiologischer
Kochsalzlösung 2 Tage lang hydratisiert.

Die Veränderung des Radius wurde danach über einen
Zeitraum von 30 Tagen überprüft. Es ergaben sich
folgende Änderungen:

Le A 22 431

| nach Tagen | Versteilung[x] | Abflachung[x] |
|---|---|---|
| 1 | 0,035 mm | |
| 2 | 0,02 mm | |
| 5 | - | - |
| 30 | - | 0,01 mm |

[x] Die Werte beziehen sich auf die Änderung gegenüber dem vorherigen Wert

Das Beispiel wurde wiederholt, jedoch ausgehend von einem Copolymerisat aus 95 Gew.-% Methacrylsäuremethylester und 5 Gew.-% Acrylsäuremethylester (Intrinsicviskosität: 0,69 dl/g, gemessen bei 25°C in THF). Der Umformvorgang wurde bei 140°C und 45 Minuten vorgenommen. Die Radienstabilität wurde wie oben bestimmt, es ergaben sich folgende Änderungen:

| nach Tagen | Versteilung | Abflachung |
|---|---|---|
| 1 | 0,04 mm | |
| 2 | 0,005 mm | |
| 5 | - | - |
| 10 | 0,01 mm | |
| 30 | - | 0,01 mm |

Interferometrische Untersuchungen zeigten die Schlierenfreiheit der Linse, die Spannungslosigkeit und eine Überflächenrauhigkeit von unter 0,01 µm. Die Fehlerausschußquote der nach diesem Verfahren durch auto-

Le A 22 431

matisierte Massenproduktion hergestellten Linsen liegt
unter 15 %, verglichen mit 40 bis 60 % gemäß herkömmlichen Sinterverfahren aus Polymerpulver.

- 12 -

## Patentansprüche

1. Verfahren zur Herstellung von kontaktoptischen Formkörpern aus thermoplastisch verarbeitbaren, transparenten Materialien durch Formgebung unter Druck und Erwärmen, dadurch gekennzeichnet, daß man aus einer Folie gleichmäßiger Dicke aus dem betreffenden thermoplastischen Material optisch fehlerfreie Rohlinge vom Gewicht der herzustellenden Formkörper stanzt oder schneidet und diese zwischen zwei Stempeln entsprechend den Geometrien der herzustellenden Formkörper in einem Formwerkzeug bei Temperaturen zwischen 20 und 80°C oberhalb der Glasübergangstemperatur des thermoplastischen Materials, jedoch noch unterhalb dessen Schmelzflußtemperatur, umformt.

2. Verfahren nach Anspruch 1, dadurch gekennzeichnet, daß die Foliendicke 0,1 - 1 mm beträgt.

3. Verfahren nach Anspruch ,2 dadurch gekennzeichnet, daß die Foliendicke 0,15 - 0,5 mm beträgt.

4. Verfahren nach Anspruch 1 - 3, dadurch gekennzeichnet, daß das Gewicht des Rohlings auf ± 0,5 mg mit jenem des herzustellenden Form-körpers identisch ist.

Le A 22 431

5. Verfahren nach Anspruch 1 - 4, dadurch gekennzeichnet, daß der Druck beim Umformen 1 - 100 kg/cm² beträgt.

6. Verfahren nach Anspruch 5, dadurch gekennzeichnet, daß der Druck mindestens 5 kg/cm² beträgt.

7. Verfahren nach Anspruch 1 - 6, dadurch gekennzeichnet, daß die Dauer des Umformvorganges 5 - 120 Minuten beträgt.

8. Verfahren nach Anspruch 7, dadurch gekennzeichnet, daß die Dauer 20 - 60 Minuten beträgt.

9. Verfahren nach Anspruch 1 - 8, dadurch gekennzeichnet, daß die Temperatur während des Umformganges 20 - 60°C oberhalb der Glasübergangstemperatur des thermoplastischen Materials liegt.

10. Verfahren nach Anspruch 1 - 9, dadurch gekennzeichnet, daß als thermoplastische Materialien halbharte bis harte organische Polymere auf Basis von Celluloseestern aliphatischer $C_2$-$C_4$-Carbonsäuren; Homo- oder Copolymerisaten von Methacryl- und Acrylsäureestern, Styrol, Acrylnitril und Vinylchlorid; Polycarbonate; Polyamide; bzw. Polymerblends auf Basis dieser Polymere verwendet werden.

Le A 22 431